# EUROPEAN PATENT APPLICATION

(11) **EP 4 678 691 A1**
(43) Date of publication of application: **14.01.2026**
(21) Application number: 24187968.3
(22) Date of filing: 11.07.2024
(51) Int. Cl.: C08J 11/22

(54) **ALKALINE COOKING PROCESS FOR TEXTILE MATERIAL**

(71) Applicant: Lenzing Aktiengesellschaft, 4860 Lenzing (AT)
(72) Inventor: De Bittencourt Grötzner, Mariana, 4863 Seewalchen (AT); Gröstlinger, Hans, 4905 Thomasroith (AT); Herchl, Richard, 4910 Ried im Innkreis (AT); Thaler, Michael, 4850 Timelkam (AT); Shagaev, Oleg, 1190 Wien (AT); Fackler, Karin, 1140 Wien (AT); Göpfert, Harald, 4600 Wels (AT); Klaus-Nietrost, Christoph, 4840 Vöcklabruck (AT); Widhalm, Johannes, 4846 Redlham (AT)
(74) Representative: Global Patent Management Lenzing AG

(57) **Abstract**

A recycling process for recycling cellulose out of a post-industrial or post-consumer textile material containing a cellulosic material and a polyester material by selectively solubilizing/hydrolyzing the polyester fraction in alkaline media ("cooking"), containing the steps of a) mixing a textile material with an alkaline solution containing Na₂CO₃ and optionally additionally NaOH, b) cooking the mixture, thereby solubilizing/hydrolyzing the polyester fraction in the alkaline solution, c) separating the insoluble raw cellulose fiber fraction and the used alkaline solution ("weak liquor"), d) concentrating the weak liquor in a concentration stage, thereby producing a concentrated liquor, e) recovering the Na₂CO₃ from the concentrated liquor in a recovery device, thereby obtaining a Na₂CO₃-rich solution and f) recycling the Na₂CO₃ from step e. into step a..

## Description

### Field of the invention

The present invention comprises a recycling process for recycling cellulose out of a post-industrial or post-consumer textile material () containing a cellulosic material and a polyester material by selectively solubilizing/hydrolyzing the polyester fraction in alkaline media ("cooking"), containing the steps of a) mixing a textile material with an alkaline solution containing Na₂CO₃ and optionally additionally NaOH or other available alkaline sources from viscose fiber and dissolving wood pulp processes, b) cooking the mixture, thereby solubilizing/hydrolyzing the polyester fraction in the alkaline solution, c) separating the insoluble raw cellulose fiber fraction and the used alkaline solution ("weak liquor"), d) concentrating the weak liquor in a concentration stage, thereby producing a concentrated liquor, e) recovering the Na₂CO₃ from the concentrated liquor in a recovery device, e.g. a soda recovery boiler, thereby obtaining a Na₂CO₃ rich solution and f) recycling the Na₂CO₃ from step e. into step a..

### Description of the Related Art

Globally there is a need for the recycling of textile material in order to omit emissions as well as to spare the natural resources. A huge share of the textile materials used world-wide consists of or contains cellulosic fibers, either natural cellulosic fibers like cotton, hemp, linen etc. or man-made cellulosic fibers like viscose, modal, Lyocell, cupro etc.. Used cellulosic textile fibers may in principle be re-used to produce cellulosic fibers. However, practically there are many problems, like the presence of fibers of other nature, like synthetic fibers, protein fibers, as well as of impurities like dyestuffs, easy-care finishes, buttons, zips, dirt and many others. Hence, there is a need for making cellulosic textile waste materials suitable for being used in a cellulosic fiber manufacturing process like the viscose, modal, Lyocell or cupro process.

Cellulosic fiber manufacturing processes in general are known to the public and so are many technologies for the recycling of textile waste. For example, caustic cooks of cellulose containing textiles with NaOH in form of cotton/polyester blends for molecular recycling of cellulosic fibers are disclosed - among others - in WO 2020/245058 A1 and WO 2020/245055 A1.

In the manufacturing of cellulosic pulp from wood, in particular according to the chemical pulping processes, e.g. in a sulfite process, a liquor is formed when the acidic pulp from sulfite cooking enters the fiber line and goes through an alkaline extraction process and oxygen stages. A counter-current washing from those fiber line steps generate the pulping liquor, which is afterwards usually thickened in an evaporator or concentrator.

The recovery of pulping chemicals and energy from spent liquor after thickening is performed by recovery processes, e.g. burning it in a soda recovery boiler, where sodium carbonate (Na₂CO₃) is the main product. The tasks of such recovery processes include recovery of chemicals and recovery of thermal energy generated in the process. As an example, the soda recovery boiler comprises a furnace fed with alkaline liquor from pulping process and air required for combustion. The thermal energy generated in the burning process is usually used for producing superheated high-pressure steam to be used, inter alia, in the production of electricity.

The inorganic flow coming from the recovery process, e.g. the smelt from a soda recovery boiler, will be mixed with water producing a sodium carbonate rich solution. A stream of ashes which may originate for example from filter device from the recovery system may also be alternatively be used as a source of sodium carbonate.

According to the state of the art in recovery systems of kraft pulp mills, the sodium carbonate from the black liquor recovery boiler is re-causticized with calcium oxide to recover NaOH as cooking chemical. This process needs either the purchase of calcium oxide as a raw material and a way to get rid of the formed calcium carbonate or the calcium carbonate is transformed into calcium oxide in a so-called lime-kiln at very high temperatures. Alternatively, the sodium carbonate can be used as neutralization agent to a waste water treatment plant or as a solid waste or sellable product.

All of these options have their drawbacks, particularly in terms of cost and in most cases of sustainability, as fossil fuel may be demanded.

### Problem

In view of the prior art as described above there was a need for a more efficient process for the recycling of a mixed textile material that reduces energy consumption as well as waste chemicals.

### Summary of the Invention

These problems could be resolved by a recycling process for recycling cellulose out of a textile material containing a cellulosic material and a polyester material by selectively solubilizing/hydrolyzing the polyester fraction in alkaline media ("cooking"), containing the steps of
a. Mixing a textile material, in particular a post-industrial or post-consumer textile material, with an alkaline solution containing Na₂CO₃ and optionally additionally NaOH.
b. Cooking the mixture at a temperature of between 90 and 190°C (preferably 130-150°C), a retention time of between 1 and 48 hours, preferably 2 to 8 hours, and an alkali concentration of between 10 and 100 g/L Na₂CO₃, preferably between 40 and 80g/L Na₂CO₃, thereby solubilizing/hydrolyzing the polyester fraction in the alkaline solution.
c. Separating the insoluble raw cellulose fiber fraction and the used alkaline solution ("weak liquor"). This liquor contains among other substances ethylene glycol, terephthalic acid (in its anionic form potentially also with salt form precipitated), and the caustic cooking chemical. The cooking chemical is recovered and not discharged, which means that a re-causticizing process in the cooking chemical recovery is not required.
d. Concentrating the weak liquor in a concentration stage, thereby producing a concentrated liquor. The concentration stage may comprise e.g. an evaporator or dryer. For an efficient recovery process of the liquor, e.g. incineration in the recovery boiler, the weak liquor should be concentrated up to a solids content of at least 50% w/w, more preferable 70% w/w or higher.
e. Recovering the Na₂CO₃ from the concentrated liquor in a recovery process e.g. in a soda recovery boiler, thereby obtaining Na₂CO₃ rich solution. A soda recovery boiler is principally well known in the industry. The recovery process e.g. in a soda recovery boiler may be exclusively incinerating the concentrated liquor of step d. of the present invention. But it may also be a boiler that additionally incinerates mixture of liquors out of another pulping process, for example a sulfite pulping process.
f. Recycling the Na₂CO₃ rich solution from step e. into step a.. The recycling of the Na₂CO₃ can be done by simply dissolving the inorganic stream from the recover process e.g. from the soda recovery boiler with water or an aqueous NaOH solution and using this solution as the alkaline solution of step a.. If necessary, the solution may be further cleaned by principally known cleaning measures like metal coagulation, similar to the standard processing in the kraft recovery process of the so-called "green liquor".

The textile material may further contain up to 5% of foreign matter. Surprisingly it was found that cooking with sodium carbonate allows for recovery of sodium carbonate by a recovery process, e.g. burning the concentrated spent cooking liquor and dissolving the inorganic stream. In contrast to an NaOH cooking, sodium carbonate cooking does not require additional unit operations like the re-causticizing which in the majority of system requires a (fossil) energy intensive step. This leads to a favorable energy balance of the process and a simpler process. The products of the degradation of the polyesters ("PES"), most common polyethylene terephthalate ("PET"), such as terephthalic acid, ethylene glycol etc. are further processed in the recovery device, for example incinerated in the boiler and therefore contribute to the heat energy recovery.

In a preferred embodiment of the present invention before step d. an NaOH-containing aqueous liquid is added to the weak liquor of step c..

In a further preferred embodiment of the present invention the NaOH-containing aqueous liquid is taken from a dissolving wood pulp production process or a viscose production process. This NaOH-containing aqueous liquid may be a press lye or a permeate or retentate from a membrane separation process within the viscose production. It also may be the used extraction liquid from a caustic extraction, such as a hot or cold caustic extraction, stage of a pulp process.

In a preferred embodiment of the present invention before step e. a pre-concentrated NaOH-containing liquid is added to the concentrated liquor of step d.. In a further preferred embodiment of this process the pre-concentrated NaOH-containing liquid is taken from a dissolving wood pulp production process or a viscose production process. This NaOH-containing aqueous liquid also may be a concentrated used extraction liquid from a caustic extraction, such as a hot or cold caustic extraction, stage of a pulp process.

According to another preferred embodiment of the present invention the cooking step c. is either performed as a continuous cooking or a batch cooking. In the context of this document, the term "continuous" may in particular denote that a technical process is performed without interruptions. In other words, a (continuous, "steady-state") long-lasting material flow (which comprises at least the stages i) supplying, ii) treating; and iii) discharging) may be performed which is substantially not interrupted. In contrast, a discontinuous or "batch" process is frequently interrupted, since a treatment is performed batchwise (respectively chargewise). In the continuous process, supplying and discharging may also be performed continuously. For example, a reaction device may be designed at least such that the starting material is continuously supplied to a first opening, and treated starting material may be continuously discharged from a second opening, while in between continuously treating and moving takes place.

The combination of the process of the invention with a sulfite pulp mill is particularly advantageous because it avoids the need of a re-causticizing process to generate the sodium hydroxide that is usually needed in alkaline textile cooking processes according to the state of the art for the hydrolysis of polyester.

In a preferred embodiment of the present invention the insoluble raw cellulose fiber fraction is subsequently bleached in a bleaching stage, which is a part of an aftertreatment stage, and the filtrate of the bleaching stage is recycled into the cooking stage b.. The bleaching stage may further contain an alkaline oxygen sub-stage (O-stage) to continue pulp properties development and the degradation products of the O-stage are also removed in a subsequent washing step. The bleaching stage may further contain a TCF bleaching sequence to achieve the desired quality parameters. The alkaline filtrates from O-sub-stages may be sent to a recovery device in order to recover chemicals and energy. They may be further mixed with alkaline liquor from e.g. a viscose process and may be subsequently thickened to a dry solids content of above 65%. This liquid may be burned in the recovery boiler, too.

In an integrated dissolving wood pulp and viscose fiber production site various integration options can be employed. Alkaline weak liquors from sulfite pulping, in particular from caustic extraction or from a viscose process or a cold caustic extraction from a kraft system can be used and added either (1) in cooking as cooking liquor, (2) before evaporation/concentration to the weak liquor, or (3) before the recovery process to the concentrated liquor. According to the experience of the inventors in option (2) the ratio of sodium carbonate cooking liquor to weak liquor should be kept in a certain range in order to prevent from precipitation of polyester residues. Exact values would depend on the specific composition of the liquors. Example 3 below shows some trials, accordingly.

In total, the overall mass and energy balance of an integrated wood pulping, textile recycling and viscose production can be significantly improved by the process of the invention.

### Brief Description of the Drawing

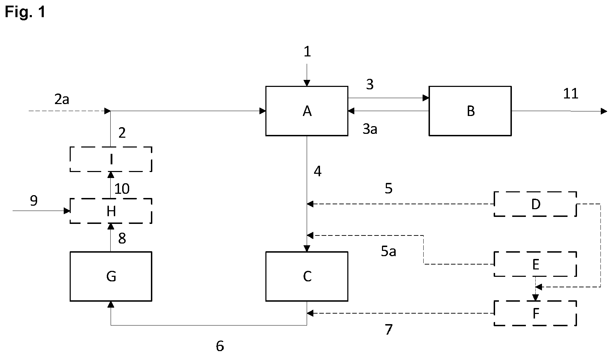

Hereinafter, exemplary embodiments of the invention are described with reference to the drawing, wherein Fig. 1 shows the scheme of the recycling process of the invention including the recovery with exemplified integration options in the caustic cycle of a viscose plant and/or alkaline cycle of a sulfite dissolving wood pulp plant. Dashed elements mean optional elements of the process.

### Detailed Description of the Drawing

Fig. 1 shows a preferred embodiment of the present invention. The references therein are explained as follows.

Letters identify devices or operation units:
A is a digester wherein the cooking of the textile raw material takes place. After the cooking the content of the digester is separated into the cooked textile raw material, which is usually in a fibrous state, and the used cooking liquid, also called "weak liquor".

B is an aftertreatment of the cooked textile raw material, also identified as "fiber line", which is a collective term also used for similar aftertreatments of cooked wood pulp. The aftertreatment may contain at least a bleaching stage, consisting of one or more bleaching sub-stages.

C is a concentrator for the weak liquor from the digester. The concentrator may comprise e.g. an evaporator or dryer.

D shall mean (optionally) the hot or cold caustic extraction (HCE or CCE) stage of a wood pulp mill.

E shall mean (optionally) a viscose fiber plant.

F shall mean (optionally) a concentrator, e.g. an evaporator of a wood pulp mill that concentrates the used liquor coming from the HCE or CCE stage of that wood pulp mill and optionally the stream E can be mixed.

G shall mean the device for a recovery process according to the invention, e.g. a soda recovery boiler.

H shall mean the dissolving device for the inorganic stream 8 coming from the recovery device G, dissolving the solid inorganic stream 8, containing mainly Na₂CO₃ from the recovery device with water or with an aqueous NaOH solution.

I (an optional unit) shall mean a cleaning stage for removing unwanted impurities of the dissolved diluted inorganic stream 10. This cleaning stage may include principally known cleaning measures like metal coagulation, similar to the standard processing of the so-called diluted inorganic stream 10.

Numbers identify specific material streams:
1 means a textile raw material consisting of cotton and polyester blends, with or without colorants. Textile fibers from other materials, in particular foreign fibers such as PES fibers, can be present up to 10% in weight, preferably up to 5% in weight.
2 means the cooking liquor containing sodium carbonate originated from the soda recovery boiler. Minimum required Na₂CO₃ charge is 1.4 g Na₂CO₃ per 1 g PES in stream 1 if NaOH in the cooking liquor shall be completely replaced by Na₂CO₃.
2a means (optionally) an alkaline stream added if required to compensate losses in the process or to optimize the economics of the process. This stream 2a may be a sodium hydroxide solution or a weak liquor from a dissolving wood pulp hot caustic extraction process, consisting mainly of water, NaOH and hemicellulose or a liquor from viscose fiber production as press lyes and lyes from membrane process, i.e. permeate or retentate, also consisting mainly of water, NaOH and hemicellulose. Liquor from a cold caustic extraction could also be used as an alkaline source. This stream 2a may also contain fresh Na₂CO₃.
3 means the textile pulp consisting in a cellulose based pulp originated from the cooking process of textile raw material with cooking liquor.
3a means filtrates from aftertreatment B, in particular the filtrate of the bleaching stage within the aftertreatment, that may be directly guided or pre-treated before going back to digester A, also including heat recovery systems.
4 means the weak liquor consisting in a spent liquor taken from the cooking process of textile raw material and cooking liquor according to the present invention. The pH of this liquor 4 shall be between 7,5 and 13,5 and the dry solids content shall be below 50%wt, preferably between 3 and 15%wt. Polyester degradation products concentration is expected as follows: (i) disodium terephthalate up to 400 g/kg of liquor and (ii) ethylene glycol up to 120 g/kg of liquor, both depending on the content of the polyester in the textile raw material. The weak liquor may contain precipitates from the PET degradation products.
5 means (optionally) a weak liquor from a dissolving wood pulp hot or cold caustic extraction process, consisting mainly of water, NaOH and hemicellulose. The effective alkali concentration of this liquor 5, measured as NaOH, may be in the range of 0-100 g/L.
5a means (optionally) liquors from viscose fiber production as press lyes and lyes from a membrane process, i.e. permeate or retentate, also consisting mainly of water, NaOH and hemicellulose. The alkali concentration of this stream 5a may be in the range of 15-250 g/L, measured as NaOH.
6 means a concentrated liquor mix, consisting of the concentrated weak liquor from textile raw material cooking (i.e. stream 4) and the optional streams 5 and/or 5a after the concentration process and optionally stream 7. Its dry solids content is higher than 50,0% w/w. The upper limit depends on several factors such as the technology used for recovery in the device G.
7 means the concentrated weak liquor from a dissolving wood pulp hot or cold caustic extraction D after a concentration process. Its dry solids content is higher than 50,0% w/w. The upper limit again depends on several factors like the technology used for recovery in the device G.
8 means an inorganic stream preferable in a form of smelt coming from the recovery device G.
9 means water to dissolve the inorganic stream (stream 8).
10 means the sodium carbonate rich solution after the inorganic stream dissolution.
11 means an aftertreated, at least bleached, textile pulp ready for a further processing, for example as the raw material for cellulosic man-made fibers like viscose, modal or lyocell fibers. Hence, pulp viscosity after bleaching may be between 250-700 ml/g.

The invention will now be illustrated by examples. These examples are not limiting the scope of the invention in any way. The invention includes also any other embodiments which are based on the same inventive concept

### Examples

### Methods:

Yield, excluding PET, given in % w/w, was determined gravimetrically.

Textile pulp residual PES content, given in % w/w, was determined according to ISO 1833-1:2020.

Textile pulp viscosity, given in ml/g, was determined according to ISO 5351:2010 .

Textile pulp brightness, given in %ISO, was determined according to ISO 2470-1:2016.

Textile pulp extractives, given in % w/w, was determined according to ISO 14453:2014.

Textile pulp ashes content, given in % w/w, was determined by calcination at 850°C.

Spent cooking liquor pH, was measured with a standard pH electrode at 25°C.

Spent cooking liquor dry solids, given in % w/w, was determined gravimetrically after drying in vacuum (-0.8bar) at 105°C.

Spent cooking liquor: ashes, given in % w/w, was determined by calcination at 850°C.

### Example 1: Alkaline cooking of colored cotton rich raw material with 10% PES

A post-consumer textile raw material containing mainly cotton and PES, with a PES content of 10% and colored, was added to a laboratory scale horizontal reactor vessel equipped with a mixer. Solid to liquid ratio in the reactor was 1 to 7 (w/w). In trial 1.1 (according to the invention) a filling liquor containing sodium carbonate with a concentration of 80 g Na₂CO₃/L was used as reagent for performing PES and cellulose degradation. In the comparative trial 1.2 a filling liquor containing sodium hydroxide with a concentration of 20 g NaOH/L was used as reagent for performing PES and cellulose degradation. Conditions for both trials were: A temperature in the vessel of 150°C and a retention time of 2 hours. After the cooking was finished, the spent cooking liquor was drained and the pulp was submitted to a laboratory washing where water was added at a liquid to solid ratio of 20 m³ water per ton of bone dry pulp and the pulp was then centrifuged up to a consistency, i.e. fiber content in the fiber dispersion, of 30-35% w/w. The results of both trials can be seen in Table 1. Example 1 shows that by cooking with Na₂CO₃ results were achieved compared to cooking with NaOH that still were acceptable for the further processing of the pulp.

**Table 1: Experiment results of Example 1**

| | | Trial 1.1 - Na₂CO₃ | Trial 1.2 - NaOH |
|---|---|---|---|
| Yield, excluding PET | % w/w | 80-90 | 80-90 |
| Textile pulp residual PES content | % w/w | <2 | <2 |
| Textile pulp viscosity | ml/g | 747 | 606 |
| Textile pulp brightness | %ISO | 38.6 | 49.5 |
| Textile pulp extractives | % w/w | 0.55 | 0.48 |
| Textile pulp ashes content | % w/w | 0.95 | 0.66 |
| Spent cooking liquor: pH | - | 9.2 | 13.0 |
| Spent cooking liquor: dry solids | % w/w | 7.8 | 4.6 |
| Spent cooking liquor: ashes | % w/w | 5.6 | 2.4 |

### Example 2: TCF bleaching of textile pulp from sodium carbonate cooking

Post consumer textile raw material containing mainly cotton and PES, with a PES content of 20% and colored, was first cooked with sodium carbonate in same conditions as described in Example 1. The cooked textile pulp was submitted to a TCF laboratory bleaching where ozone charge was in the range of 2.5-4.0 kg per ton of bone dry pulp. The final bleached pulp showed a viscosity of 350 ml/g and brightness in the range of 85-90%ISO. Example 2 shows that by this bleaching step similar bleaching levels could be achieved by the sodium carbonate cooking compared to a conventional NaOH cooking.

### Example 3: Textile cooking liquor mixes ratios with weak liquor from a dissolving wood pulp hot caustic extraction process

Spent textile sodium carbonate cooking liquor generated in laboratory in a system as described in Example 1 is mixed in different ratios with a weak liquor from a dissolving wood pulp hot caustic extraction liquor ("Pulp Filtrate"). The mixes were evaporated in a small scale rotating laboratory evaporator (Rotovapor^{®}) at 80°C, 100 mbar (abs) and with an addition of 0.2% w/w defoamer. The spent textile liquor from sodium carbonate cooking originally showed a dry solids content of 14% w/w and a concentration of disodium terephthalate ("Na-TPA") of 87.5 mg per kg of total liquor sample. The concentrated liquors were investigated for the precipitation of the Na-TPA. This compound, the disodium terephthalate, is a salt generated in the alkaline hydrolysis of the PES, which can precipitate in an early stage during the evaporation due to its low solubility in water.

Table 2 shows the results for the concentrated liquor from the laboratory evaporation trials with different mixes ratios, the dry solids content and the observation of precipitation occurrence. For the observed case, 10% of textile liquor mixed with 90% of Pulp Filtrate led to a condition without Na-TPA precipitation in the concentrated liquor (at 68.5% dry solids concentration). Example 3 shows that it is possible to further process textile liquor by blending with Pulp Filtrate before concentration/evaporation.

**Table 2: Precipitation occurrence in evaporation trials of Example 3**

| - | **Before Evaporation** | **After Evaporation** | | |
|---|---|---|---|---|
| Sample ID | Mix ratio (%wt) Pulp Filtrate: textile liquor | Dry solids, %wt "a" | Concentration of Na-TPA (mg/kg of total liquor sample at dry solids content from "a") | Precipitation observation |
| 3.1 | 0:100 | 74.2 | 446.7 | Yes |
| 3.2 | 50:50 | 73.7 | 336.9 | Yes |
| 3.3 | 75:25 | 65.3 | 199.1 | Yes |
| 3.4 | 90:10 | 68.5 | 126.3 | No |
| 3.5 | 100:0 | 76.7 | 0 | Not applicable |

## Claims

1. A recycling process for recycling cellulose out of a textile material containing a cellulosic material and a polyester material by selectively solubilizing/hydrolyzing the polyester fraction in alkaline media ("cooking"), containing the steps of
a. Mixing a textile waste with an alkaline solution containing Na₂CO₃ and optionally additionally NaOH,
b. Cooking the mixture at a temperature of between 90 and 190°C, preferably 130-150°C, a retention time of between 1 and 48 hours, preferably 2 to 8 hours, and an alkali concentration of between 10 and 100 g/L Na₂CO₃, preferably between 40 and 80g/L Na₂CO₃, thereby solubilizing/hydrolyzing the polyester fraction in the alkaline solution,
c. Separating the insoluble raw cellulose fiber fraction and the used alkaline solution ("weak liquor"),
d. Concentrating the weak liquor in a concentration stage, thereby producing a concentrated liquor,
e. Recovering the Na₂CO₃ from the concentrated liquor in a recovery device, thereby obtaining a Na₂CO₃-rich solution.
f. Recycling the Na₂CO₃ from step e. into step a..

2. The process of claim 1, wherein before step d. an NaOH-containing aqueous liquid is added to the weak liquor of step c..

3. The process of claim 2, wherein the NaOH-containing aqueous liquid is taken from a dissolving wood pulp production process or a viscose production process.

4. The process of claim 1 wherein before step e. a pre-concentrated NaOH-containing solution is added to the concentrated liquor of step d..

5. The process of claim 4, wherein the NaOH-containing aqueous liquid is taken from a dissolving wood pulp production process or a viscose production process and pre-concentrated before the mixing whereby the pre-concentrated NaOH-containing solution is obtained.

6. The process of claim 1, wherein the cooking step c. is either performed as a continuous cooking or a batch cooking.

7. The process of claim 1, wherein the insoluble raw cellulose fiber fraction is subsequently bleached in a bleaching stage, and the filtrate of the bleaching stage is recycled and may optionally be cleaned before going into the cooking stage b.

8. The process of claim 1, wherein the recovery device is a soda recovery boiler.
